# EUROPÄISCHE PATENTANMELDUNG

(11) **EP 4 321 017 A1**
(43) Veröffentlichungstag der Anmeldung: **14.02.2024**
(21) Anmeldenummer: 23190356.8
(22) Anmeldetag: 08.08.2023
(51) Int. Cl.: A01K 13/00, A46B 5/06, A46B 13/02

(54) **KÄMMVORRICHTUNG**

(30) Priorität: 12.08.2022 DE 102022120444
(71) Anmelder: Kücükoglu, Dursun, 80689 München (DE)
(72) Erfinder: Kücükoglu, Dursun, 80689 München (DE)
(74) Vertreter: Hoefer & Partner Patentanwälte mbB

(57) **Zusammenfassung**

Die Erfindung betrifft eine Kämmvorrichtung (1) für Tiere umfassend: ein Gehäuse (2), einen umlaufenden Riemen (3), wobei auf dem Riemen (3) Erhebungen (4) angeordnet sind und die Erhebungen (4) eine Erhebungshöhe (a) über dem Riemen (3) aufweisen, einen Antrieb (5), und eine Trennführung (6, 7), welche im Gehäuse (2) angeordnet ist, wobei der Riemen (3) in dem Gehäuse (2) angeordnet ist und zumindest ein Teil des Riemens (3) und/oder der Erhebungen (4) aus dem Gehäuse (2) heraustritt, wobei der Antrieb (5) eingerichtet ist den Riemen (3) entlang einer Umlaufrichtung (100) zu bewegen, wobei die Erhebungen (4) eingerichtet sind bei der Bewegung des Riemens (3) Haare aus einem Fell eines Tieres aufzunehmen, und wobei die Trennführung (6, 7) eingerichtet ist, mittels zwischen den Erhebungen (4) angeordneten Trennführungszinken (8, 9) die von den Erhebungen (4) aufgenommenen Haare innerhalb des Gehäuses (2) abzustreifen.

## Beschreibung

Die Erfindung betrifft eine Kämmvorrichtung. Die Kämmvorrichtung dient zum Kämmen von Tieren, wobei insbesondere von dem Tier abfallende Haare aufgenommen werden.

Aus dem Stand der Technik sind Fellpflegekämme für Haustiere bekannt. Beispielsweise sollten Hund gerade zu Fellwechselzeiten im Herbst und im Frühjahr regelmäßig gekämmt werden, um den Fellwechselvorgang zu unterstützten. Außerdem kann auf diese Weise die Menge an innerhalb von Räumlichkeiten unkontrolliert abgegebenen Haaren verringert werden.

So offenbart die DE 20 2018 005 747 U1 eine Hundehandschuhbürste, mit der ein Kämmen des Fells eines Hundes ermöglicht ist, wobei aufgenommene Haare an dem Handschuh verbleiben und entfernt werden müssen. Um den Reinigungsvorgang einer Bürste zu vereinfachen, offenbar die DE 10 2010 000 382 A1 einen Aufsatz für einen Staubsauger, aus dem eine Bürste zur Fellpflege entnehmbar ist, wobei die Bürste nach Benutzung zur Reinigung in den Staubsaugeraufsatz steckbar ist, wodurch von der Bürste aufgenommene Haare mittels Absaugung entfernt werden können.

Es ist Aufgabe der Erfindung eine Kämmvorrichtung bereitzustellen, die bei einfacher und kostengünstiger Herstellung ein zuverlässiges Kämmen und Aufnehmen von Haaren ermöglicht.

Die Lösung dieser Aufgabe erfolgt durch die Merkmale des unabhängigen Anspruchs. Die Unteransprüche haben bevorzugte Weiterbildungen der Erfindung zum Inhalt.

Die Aufgabe wird gelöst durch eine Kämmvorrichtung für Tiere, die ein Gehäuse, einen umlaufenden Riemen, einen Antrieb und eine Trennführung aufweist. Auf dem sind Erhebungen, insbesondere noppenförmige Erhebungen, angeordnet. Die Erhebungen weisen eine Erhebungshöhe über dem Riemen auf. Diese Erhebungshöhe ist bevorzugt für alle Erhebungen gleich groß. Die Erhebungen sind vorteilhafterweise gleichmäßig an dem Riemen vorgesehen. Riemen und Erhebungen sind insbesondere aus Kunststoff, beispielsweise aus Silikon oder eine Gummi-Silikon-Mischung, gefertigt.

Der Riemen ist in dem Gehäuse angeordnet, wobei zumindest ein Teil des Riemens und/oder der Erhebungen aus dem Gehäuse heraustritt. So ist insbesondere eine Austrittsstelle vorgesehen, an der der Riemen aus dem Gehäuse heraustritt, sowie eine Eintrittsstelle, in der der Riemen in das Gehäuse eintritt. Der Antrieb ist ausgebildet, den Riemen entlang einer Umlaufrichtung zu bewegen. Auf diese Weise werden die Erhebungen außerhalb des Gehäuses von der Austrittsstelle zu der Eintrittsstelle und innerhalb des Gehäuses von der Eintrittsstelle zu der Austrittsstelle bewegt. Außerhalb des Gehäuses können die Erhebungen zum Kämmen eines Fells eines Tieres verwendet werden. So sind die Erhebungen eingerichtet, bei der Bewegung des Riemens Haare aus einem Fell eines Tieres aufzunehmen. Da der Riemen in Umlaufrichtung bewegt wird, erfolgt ein Transport der aufgenommenen Haare zu der Eintrittsstelle und damit in ein inneres des Gehäuses.

Innerhalb des Gehäuses ist die Trennführung vorgesehen. Bevorzugt ist auch der Antrieb innerhalb des Gehäuses vorhanden. Durch die Trennführung sind die Haare von dem Riemen und den Erhebungen entfernbar. Die Trennführung weist dazu zwischen den Erhebungen angeordneten Trennführungszinken auf. Über die Trennführungszinken sind die von den Erhebungen aufgenommenen Haare innerhalb des Gehäuses abstreifbar. Somit verbleiben die Haare innerhalb des Gehäuses und werden dort gesammelt, während der von Haaren befreite Riemen an der Austrittsstelle aus dem Gehäuse austreten und wiederum Haare aufnehmen kann.

Wird der Riemen entlang der Umlaufrichtung bewegt, so ist vorgesehen, dass die Erhebungen zwischen den Trennführungszinken hindurch bewegt werden. Besonders vorteilhaft ist in einer Richtung quer zur Umlaufrichtung zumindest eine Trennführungszinke zwischen je zwei benachbarten Erhebungen vorgesehen. Die Trennführungszinken weisen einen minimalen Abstand zu dem Riemen auf und liegen besonders vorteilhaft an dem Riemen an. Somit lassen sich Haare von dem Riemen zuverlässig abstreifen.

Wird das Fell eines Tieres, beispielsweise eines Hundes, mit der Kämmvorrichtung gekämmt, so wird das Fell von losen Haaren befreit. Die Haare gelangen in das Innere des Gehäuses und werden dort gesammelt, sodass die vom Fell aufgenommenen Haare ohne Verunreinigung der Umgebung gesammelt werden. Hierbei ist insbesondere vermieden, dass die Kämmvorrichtung an ein zusätzliches Gerät, wie beispielsweise einen Staubsauger, angeschlossen werden muss.

Bevorzugt weist die Trennführung eine erste Trennführung und eine zweite Trennführung auf. Die erste Trennführung weist erste Trennführungszinken und die zweite Trennführung weist zweite Trennführungszinken auf. Die Geometrie der zweiten Trennführungszinken ist bevorzugt unterschiedlich von der Geometrie der zweiten Trennführungszinken. Auf diese Weise lassen sich unterschiedlich an dem Riemen vorhandene Haare optimal abstreifen. Der Riemen wird bevorzugt bei Bewegung entlang der Umlaufrichtung innerhalb des Gehäuses zuerst an der ersten Trennführung und danach an der zweite Trennführung entlanggeführt. Dies ermöglicht ein optimales Abstreifen von Haaren von dem Riemen, während der Riemen durch das Gehäuse läuft. Somit kann der Riemen mittels der Erhöhungen außerhalb des Gehäuses Haare aufnehmen und innerhalb des Gehäuses Haare abstreifen. Damit ist ein optimaler Kämmvorgang erreichbar, wobei die Haare zuverlässig in dem Gehäuse gesammelt werden.

Die Kämmvorrichtung weist vorteilhafterweise eine rotierbare Bürste auf. Die Bürste ist innerhalb des Gehäuses angeordnet und dient insbesondere der Reinigung des Riemens und/oder der Trennführung. Somit ist die Bürste eingerichtet, Haare aus der Trennführung und/oder von dem Riemen abzustreifen. Die Bürste ermöglicht somit ein Reinigen der Trennführung, wodurch die mittels der Trennführung von dem Riemen abgestreiften Haare auch von der Trennführung zuverlässig entfernt werden können. Damit kann die Trennführung zuverlässig die Haare von dem Riemen abstreifen. Die Bürste kann alternativ oder zusätzlich auch direkt Haare von dem Riemen abstreifen. Die Bürste ist vorteilhafterweise in Kontakt mit dem Riemen und/oder der Trennführung. Die Bürste rotiert insbesondere derart, dass die Bürste und der Riemen sich an der Berührstelle gleichläufig oder gegenläufig bewegen. Die Bürste kann dabei vorteilhafterweise von demselben Antrieb angetrieben werden, der auch den Riemen antreibt. Alternativ kann die Bürste eine eigene Antriebseinheit aufweisen.

Besonders vorteilhaft ist ein Bürstenabstreifer vorgesehen. Der Bürstenabstreifer ist eingerichtet ist Haare von der Bürste abzustreifen. Dazu ist der Bürstenabstreifer zinkenförmig und/oder flächig ausgebildet. Durch den Bürstenabstreifer ist ermöglicht, die Haare von der Bürste zu entfernen. Die Haare, die von dem Riemen in das Gehäuse transportiert werden, lassen sich somit innerhalb des Gehäuses sammeln. Die einzelnen Komponenten zum Aufnehmen der Haare, insbesondere der Riemen, werden dabei innerhalb des Gehäuses zu einem maximalen Grad von Haaren befreit, sodass insbesondere der Riemen erneut Haare aufnehmen kann.

Die Kämmvorrichtung weist bevorzugt einen Haarauffangbehälter auf. Dieser ist eingerichtet, die im Gehäuse von dem Riemen abgestreiften Haare aufzunehmen. Der Haarauffangbehälter ist insbesondere mit dem Gehäuse mechanisch verbunden. Der Haarauffangbehälter ist besonders vorteilhaft von dem Gehäuse trennbar, um die aufgefangenen Haare zu entsorgen. In einer weiteren vorteilhaften Ausgestaltung ist der Haarauffangbehälter aus einem transparenten Material gefertigt, um den Füllungsgrad des Haarauffangbehälter einfach erkennen zu können. Somit ist insbesondere verhinderbar, dass sich eine Kämmleistung und/oder eine Haaraufnahmeleistung der Kämmvorrichtung aufgrund eines zu vollen Haarauffangbehälters verschlechtert.

Besonders bevorzugt weist die Kämmvorrichtung ein Haargebläse auf. Das Haargebläse ist eingerichtet ist, innerhalb des Gehäuses einen Luftstrom von dem Riemen zu dem Haarauffangbehälter zu generieren. Besonders vorteilhaft ist besagter Luftstrom von der Trennführung zu dem Haarauffangbehälter generierbar. Die abgestreiften Haare können somit in besagten Luftstrom gelangen und dadurch in den Haarauffangbehälter gefördert werden. Durch den Luftstrom ist insbesondere eine Menge von Haaren, die innerhalb des Gehäuses selbst oder an der Trennführung verbleiben, minimiert. Der Benutzer kann die aufgenommenen Haare dadurch einfach durch Leeren des Haarauffangbehälters entsorgen. Der Haarauffangbehälter weist bevorzugt eine Ausgleichsöffnung und/oder einen Luftfilter auf, über die bzw. über den der von dem Haargebläse generierte Luftstrom aus der Kämmvorrichtung austreten kann. Dabei ist stets vorgesehen, dass aufgenommene Haare in dem Haarauffangbehälter rückgehalten werden.

In einer vorteilhaften Ausgestaltung weist die Kämmvorrichtung einen Einzugstopper auf. Der Einzugstopper dient einerseits dazu, dass von dem Riemen aufgenommene Haare zuverlässig in das Gehäuse gelangen können. Anderseits wird durch den Einzugstopper verhindert, dass das Fell und/oder die Haut des Tieres in das Gehäuse gezogen wird. Der Einzugstopper ist an einer Eintrittsstelle des Riemens in das Gehäuse angeordnet. Dabei ist vorgesehen, dass der Einzugstopper eine Vielzahl von Einzugstopperzinken aufweist, wobei die Einzugstopperzinken zwischen den Erhebungen angeordnet sind. Bewegt sich der Riemen entlang der Umlaufrichtung, so können die Erhebungen daher zwischen den Einzugstopperzinken hindurch in das Gehäuse gelangen. Bevorzugt ist in einer Richtung quer zur Umlaufrichtung zumindest eine Einzugstopperzinke zwischen je zwei benachbarten Erhebungen angeordnet. Die Einzugstopperzinken weisen eine dem Riemen zugewandte Unterseite und eine dem Riemen abgewandte Oberseite auf. Es ist bevorzugt vorgesehen, dass die Unterseite der Einzugstopperzinken einen geringeren Abstand zu dem Riemen als die Erhebungshöhe aufweist. Insbesondere liegt die Unterseite der Einzugstopperzinken an zumindest einer Stelle auf dem Riemen auf. Die Unterseite ist bevorzugt bezüglich des Riemens geneigt, sodass ein Abstand zwischen Riemen und Unterseite nicht an jeder Stelle gleich ist. Für einen minimalen Abstand zwischen Riemen und Unterseite gilt die zuvor genannte Bedingung. Auf diese Weise ist insbesondere vermeidbar, dass Fell und/oder Haut zwischen Riemen und Einzugstopper in das Gehäuse gezogen werden kann. Alternativ oder zusätzlich weist die Oberseite der Einzugstopperzinken einen größeren Abstand zu dem Riemen als die Erhebungshöhe auf. Dadurch lassen sich von dem Riemen aufgenommene Haare zuverlässig in das Gehäuse befördern, wobei weiterhin ein unbeabsichtigtes Einziehen von Fell und/oder Haut in das Gehäuse vermieden ist.

Die Oberfläche der Einzugstopperzinken weist bevorzugt zumindest einen Vorsprung auf. Der zumindest eine Vorsprung weist insbesondere eine entgegen der Umlaufrichtung geneigte Oberfläche auf. Durch diese Oberfläche lassen sich Haare, die nur lose an dem Riemen hängen aufsammeln, um diese mittels der Erhebungen zuverlässig in das Gehäuse zu befördern. Durch die Neigung der Oberfläche bilden Riemen und Oberfläche eine spitz zulaufende Form zum Aufsammeln der Haare.

Vorteilhafterweise weist die Oberfläche die Einzugstopperzinken mehrere Vorsprünge auf. Die Vorsprünge sind entlang der Umlaufrichtung zueinander versetzt und so angeordnet, dass sich eine in Umlaufrichtung versetzte Sägezahnstruktur ergibt. Der Abstand des jeweiligen höchsten Punktes der Sägezahnformen der Sägezahnstruktur zu dem Riemen nimmt bevorzugt in Umlaufrichtung zu. Durch eine solche Sägezahnform ist ein zuverlässiges einführen der durch den Riemen aufgenommenen Haare in das Gehäuse gewährleistet, wobei ein unbeabsichtigtes Einziehen von Haut oder Fell verhindert ist.

Bevorzugt weist die Kämmvorrichtung einen Sammelkamm auf. Der Sammelkamm ragt aus dem Gehäuse heraus, insbesondere an einer Austrittsstelle des Riemens aus dem Gehäuse. Der Sammelkamm ist bevorzugt eingerichtet, mittels Sammelkammzinken loses Haar im Fell des Tieres aufzunehmen. Auf diese Weise kann solches lose Haar von den Erhebungen des Riemens aufgenommen werden. Somit werden lose Haare aus dem Fell eines Tieres zuverlässig entfernt. Der Sammelkamm ist bevorzugt einstückig mit der zweiten Trennführung ausgebildet.

Weitere Einzelheiten, Vorteile und Merkmale der vorliegenden Erfindung ergeben sich aus nachfolgender Beschreibung von Ausführungsbeispielen anhand der Zeichnung. Es zeigt:
Fig. 1 eine schematische Ansicht einer Kämmvorrichtung gemäß einem Ausführungsbeispiel der Erfindung,
Fig. 2 eine weitere schematische Ansicht der Kämmvorrichtung gemäß dem Ausführungsbeispiel der Erfindung,
Fig. 3 eine schematische Detailansicht einer Trennführung der Kämmvorrichtung gemäß dem Ausführungsbeispiel der Erfindung, und
Fig. 4 eine schematische Detailansicht eines Bürstenabstreifers der Kämmvorrichtung gemäß dem Ausführungsbeispiel der Erfindung.

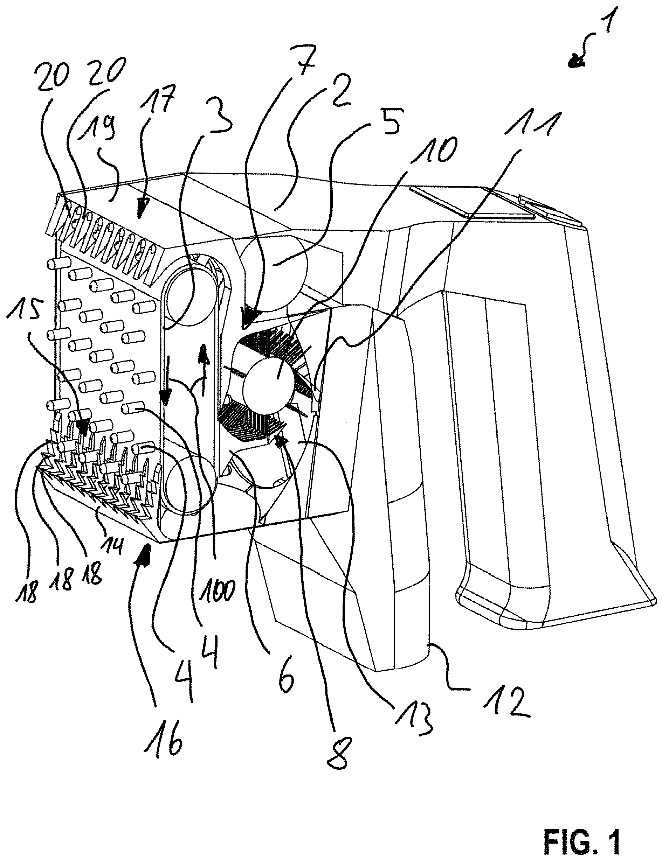

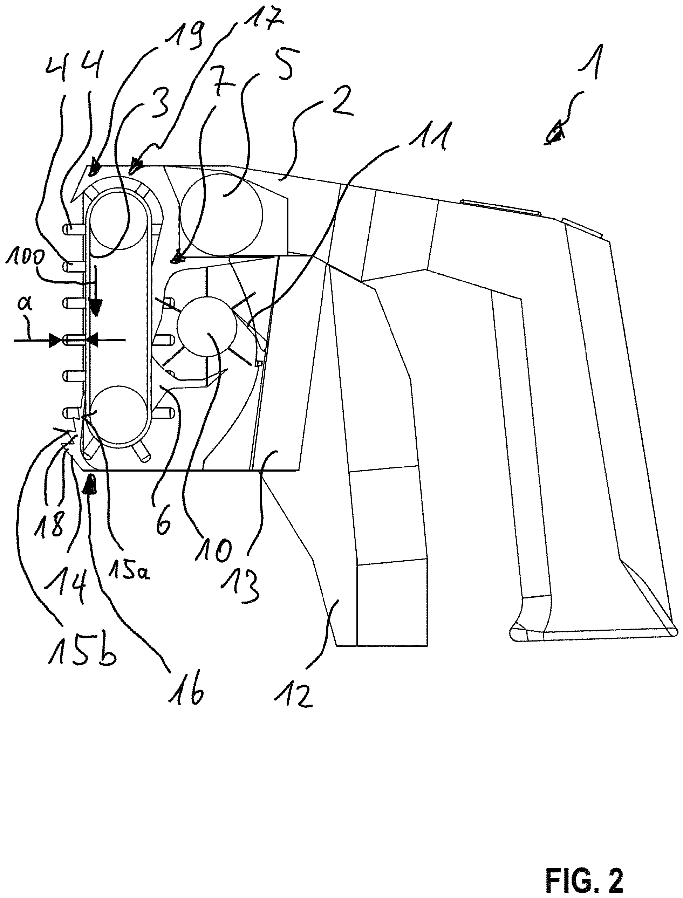

Figur 1 und Figur 2 zeigen schematisch eine Kämmvorrichtung 1 gemäß einem Ausführungsbeispiel der Erfindung. Die Kämmvorrichtung 1 dient zum Kämmen eines Fells eines Tieres, beispielsweise eines Hundes oder einer Katze oder eines Pferds. Dabei ist die Kämmvorrichtung 1 ausgebildet, lose Haare aus dem Fell des Tieres aufzunehmen und eine Gefahr eines unbeabsichtigten Einzugs des Fells oder der Haut des Tieres zu verringern. Damit eignet sich die Kämmvorrichtung 1 insbesondere zur Entfernung von Haaren aus dem Fell während einer Fellwechselzeit.

Die Kämmvorrichtung 1 weist ein Gehäuse 2 auf, wobei in Figur 1 und Figur 2 eine Seitenwand des Gehäuses 2 nicht gezeigt ist, um ein Innenleben der Kämmvorrichtung 1 darzustellen. In dem Gehäuse 2 sind die Haare sammelbar, sodass eine Verunreinigung der Umgebung mit Haaren während des Kämmvorgangs vermieden oder zumindest reduziert ist.

Die Kämmvorrichtung 1 weist weiterhin einen Riemen 3 auf, der von einem Antrieb 5 entlang einer Umlaufrichtung 100 bewegbar ist. Der Antrieb 5 ist beispielsweise ein Elektromotor. Der Riemen 3 ist innerhalb des Gehäuses 2 angeordnet, wobei ein Teil des Riemens 3 aus dem Gehäuse 2 herausragt. Wird der Riemen 3 entlang der Umlaufrichtung bewegt, so tritt dieser an einer Austrittsstelle 17 aus dem Gehäuse 2 aus und an einer Eintrittsstelle 16 in das Gehäuse 2 ein.

Auf dem Riemen 3 sind Erhebungen 4 angeordnet, die die Form von Noppen haben. Die Erhebungen 4 weisen eine Erhebungshöhe a über dem Riemen 3 auf. Die Erhebungen 4 dienen zum durchkämmen des Fells und zum Aufnehmen von losen Haaren aus dem Fell. Riemen 3 und Erhebungen 4 sind bevorzugt einstückig ausgebildet und/oder aus demselben Material gefertigt. Alternativ können Riemen 3 und Erhebungen 4 auch aus unterschiedlichen Materialen gefertigt werden. Beispielsweise sind die Erhebungen 4 und/oder der Riemen 3 aus einem Silikon gefertigt.

Die Erhebungen 4 sind bevorzugt reihenförmig und in Umlaufrichtung 100 hintereinander angeordnet. Bezüglich einer Richtung senkrecht zur Umlaufrichtung 100 können die einzelnen Erhebungen 4 ebenfalls hintereinander oder versetzt zueinander angeordnet sein.

An der Eintrittsstelle 16 ist ein Einzugstopper 14 angebracht. Der Einzugstopper 14 dient dazu, die Gefahr eines unbeabsichtigten Einziehens des Fells oder der Haut in das Gehäuse 2 zu vermeiden oder zu verringern. Außerdem unterstützt der Einzugstopper 14 das Transportieren von aufgenommenen Haaren in das Gehäuse 2, sodass eine Menge von durch das Kämmen in die Umgebung gelangenden Haaren verringert ist. Der Einzugstopper 14 weist Einzugstopperzinken 15 auf, die zwischen den Erhebungen 4 angeordnet sind, sodass die Erhebungen 4 bei Bewegung des Riemens 3 entlang der Umlaufrichtung 100 zwischen den Einzugstopperzinken 15 hindurch in das Gehäuse 2 gelangen.

Die Einzugstopperzinken 15 weisen eine dem Riemen 3 zugewandte Unterseite 15a und eine dem Riemen 3 abgewandte Oberseite 15b auf. Die Unterseite 15a und die Oberseite 15b haben unterschiedliche Funktionen. So ist die Unterseite 15a der Einzugstopperzinken 15 derart angeordnet, dass diese einen Abstand zu dem Riemen 3 aufweist, der kleiner ist als die Erhebungshöhe a. Bevorzugt liegt die Unterseite 15a an zumindest einer Stelle auf dem Riemen 3 auf. Die Einzugstopperzinken 15 sind insbesondere gegenüber dem Riemen 3 geneigt, sodass ein Abstand zwischen Unterseite 15a und Riemen 3 nicht an jeder Stelle gleich ist und die Unterseite 15a somit insbesondere nur an einer Stelle auf dem Riemen 3 aufliegen. Durch das enge Anliegen der Einzugstopperzinken 15 an dem Riemen 3 oder durch das Aufliegen der Einzugstopperzinken 15 auf dem Riemen ist ein ungewollter Einzug von Fell oder Haut in das Gehäuse erschwert oder verhindert.

Die Oberseite 15b der Einzugstopperzinken 15 weist einen größeren Abstand zu dem Riemen 3 als die Erhebungshöhe a auf. Außerdem weist die Oberfläche 15b der Einzugstopperzinken 15 mehrere Vorsprünge 18 auf, wobei in einer Alternative auch nur ein einziger Vorsprung 18 pro Einzugstopperzinke 15 vorhanden sein kann. Die Vorsprünge 18 weisen insbesondere eine entgegen der Umlaufrichtung 100 geneigte Fläche auf. Die Vorsprünge 18 jeder Einzugstopperzinke 15 sind an jeder Einzugsstopperzinke 15 entlang der Umlaufrichtung 100 zueinander versetzt und so angeordnet, dass sich eine in Umlaufrichtung 100 versetzte Sägezahnstruktur ergibt. Dabei nimmt der Abstand des jeweiligen höchsten Punktes der Sägezahnformen der Sägezahnstruktur zu dem Riemen 3 in Umlaufrichtung 100 zu. Ein höchster Punkt der größten Sägezahnstruktur der Oberfläche 15b ist bevorzugt zumindest größer als die Erhebungshöhe a. Durch die zuvor beschriebene Ausgestaltung ist die Oberfläche 15b der Einzugstopperzinken 15 ausgebildet sicherzustellen, dass Haare von den Erhebungen 4 zuverlässig in das Gehäuse 2 transportiert werden. Die Sägezahnstruktur erlaubt ein Sammeln der Haare in den Tälern der Zahnform, wobei die in das Gehäuse 2 bewegenden Erhebungen die Haare aus diesen Tälern in das Gehäuse 2 transportieren. Somit ist ein zuverlässiges Aufnehmen von Haaren durch die Kämmvorrichtung 1 gewährleistet.

Innerhalb des Gehäuses 2 ist eine Trennführung 6, 7 vorgesehen, die eingerichtet ist, mittels zwischen den Erhebungen 4 angeordneten Trennführungszinken 8, 9 die von den Erhebungen 4 aufgenommenen Haare abzustreifen. Bevorzugt gelangen die so abgestreiften Haare in einen Haarauffangbehälter 12. Der Haarauffangbehälter 12 ist eingerichtet, die im Gehäuse 2 von dem Riemen 3 abgestreiften Haare aufzunehmen und zu sammeln. Der Haarauffangbehälter 12 ist bevorzugt vom Gehäuse 2 trennbar, sodass die Haare einfach entsorgt werden können.

Besonders vorteilhaft ist ein Haargebläse 13 vorgesehen, wobei das Haargebläse 13 eingerichtet ist, innerhalb des Gehäuses 2 einen Luftstrom von dem Riemen 3 und von der Trennführung 6, 7 zu dem Haarauffangbehälter 12 zu generieren. Damit ist sichergestellt, dass die von dem Riemen 3 und/oder von den Erhebungen 4 abgestreiften Haare zuverlässig zu dem Haarauffangbehälter 12 gelangen.

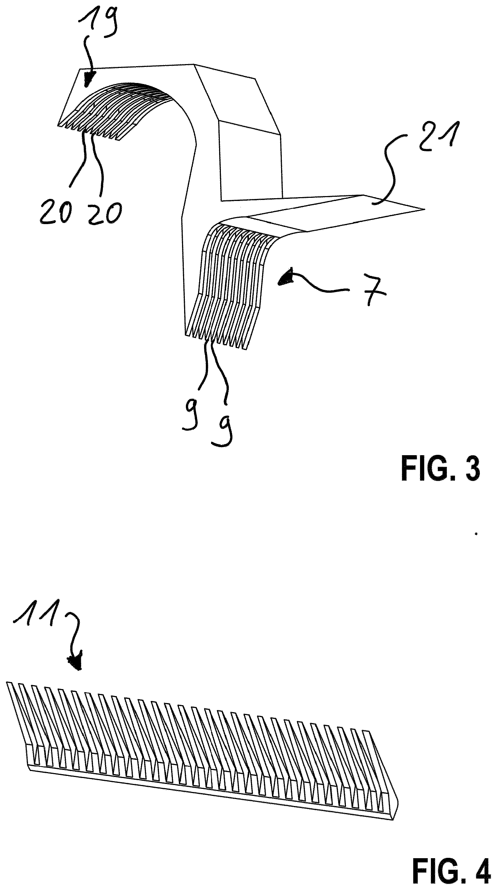

Die Trennführung 6, 7 weist insbesondere eine erste Trennführung 6 mit ersten Trennführungszinken 8 und eine zweite Trennführung 7 mit zweiten Trennführungszinken 9 auf. Die zweite Trennführung 7 ist zur besseren Übersicht auch in Figur 3 einzeln dargestellt. Die Geometrie der ersten Trennführungszinken 8 ist bevorzugt unterschiedlich von der Geometrie der zweiten Trennführungszinken 9. Die erste Trennführung 6 und die zweite Trennführung 7 sind derart angeordnet, dass der Riemen 3 bei Bewegung entlang der Umlaufrichtung 100 innerhalb des Gehäuses 2 zuerst an der ersten Trennführung 6 und danach an der zweite Trennführung 7 entlang geführt wird.

Auf diese Weise ist ein mehrstufiges Abheben der Haare von dem Riemen 3 realisiert. Zunächst werden Haare mittels der ersten Trennführungszinken 7 vom Riemen 3 abgestreift. Die ersten Trennführungszinken 7 sind insbesondere derart angeordnet, dass sich die Erhebungen 4 zwischen diesen hindurchbewegen, wobei insbesondere zumindestje eine erste Trennführungszinke 7 zwischen zwei benachbarten Erhebungen 4 vorhanden ist. An dem Riemen 3 verbleibende Haare gelangen anschließend zu der zweiten Trennführung 7, wobei auch die zweiten Trennführungszinken 8 zwischen den Erhebungen angeordnet sind. Wiederum ist bevorzugt zumindest eine zweite Trennführungszinke 9 zwischen je zwei benachbarten Erhebungen 4 angeordnet. Somit können die erste Trennführung 6 und die zweite Trennführung 7 die an dem Riemen 3 vorhandenen Haare zuverlässig abstreifen. Durch das zuvor beschriebene Haargebläse 13 werden die abgenommenen Haare zuverlässig zu dem Haarauffangbehälter 12 transportiert.

Um ein Abheben der Haare von dem Riemen 3 weiter zu verbessern, ist bevorzugt eine innerhalb des Gehäuses 2 angeordnete rotierbare Bürste 10 vorgesehen. Die Bürste 10 ist eingerichtet, Haare aus der ersten Trennführung 6, aus der zweiten Trennführung 7 und von dem Riemen 3 abzustreifen. Somit dient die Bürste 10 einerseits der Reinigung der Trennführung 6, 7, andererseits zum zusätzlichen Abheben von Haaren von dem Riemen 3. Somit kann der Riemen 3 effektiv von Haaren befreit werden, sodass dieser an der Austrittsstelle 17 vollständig oder nahezu vollständig von Haaren befreit austreten kann, wodurch die Erhebungen 4 neue Haare aus dem Fell aufnehmen können. Die Bürste 10 streift bevorzugt über eine Abstreifnase 21, die mit der zweiten Trennführung insbesondere einstückig ausgebildet ist, wodurch sich die Haare von der Bürste 10 entfernen lassen. Zusätzlich ist insbesondere ein Bürstenabstreifer 11 vorgesehen, der eingerichtet ist, Haare von der Bürste 10 abzustreifen. Der Bürstenabstreifer 11 ist dazu insbesondere kammförmig ausgebildet und kämmt bevorzugt durch die Borsten der Bürste 11. Zur besseren Übersicht ist der Bürstenabstreifer 11 nochmals in Figur 4 einzeln dargestellt. Die von der Bürste 11 aufgenommenen Haare lassen sich somit zuverlässig entfernen, sodass die Bürste 10 zum Reinigen von Trennführung 6, 7 und/oder Riemen 3 zur Verfügung steht.

Außerdem weist die Kämmvorrichtung 1 bevorzugt einen Sammelkamm 19 mit mehreren Sammelkammzinken 20 auf, der an der Austrittsstelle 16 angeordnet ist. Der Sammelkamm 19 ist bevorzugt einstückig mit der zweiten Trennführung 7 ausgebildet, sodass eine Montage der Kämmvorrichtung 1 vereinfacht ist. Der Sammelkamm 19 dient als zusätzlicher klassischer Kamm zum kämmen des Fells, wobei der Sammelkamm 19 lose Haare auffängt und für den Riemen zum Abtransport bereitstellt. Dazu laufen die Erhebungen 4 bei Bewegung des Riemens 3 entlang der Umlaufrichtung 100 zwischen den Sammelkammzinken 20 hindurch. Bevorzugt ist somit zumindest eine Sammelkammzinke 20 zwischen je zwei benachbarten Erhebungen 4 angeordnet. Somit wird eine effektive Aufnahme von Haaren aus dem Fell gewährleistet.

Neben der vorstehenden schriftlichen Beschreibung der Erfindung wird zu deren ergänzender Offenbarung hiermit explizit auf die zeichnerische Darstellung der Erfindung in den Fig. 1 bis 4 Bezug genommen.

### Bezugszeichenliste

- 1: Kämmvorrichtung
- 2: Gehäuse
- 3: Riemen
- 4: Erhebungen
- 5: Antrieb
- 6: erste Trennführung
- 7: zweite Trennführung
- 8: erste Trennführungszinken
- 9: zweite Trennführungszinken
- 10: Bürste
- 11: Bürstenabstreifer
- 12: Auffangbehälter
- 13: Haargebläse
- 14: Einzugstopper
- 15: Einzugstopperzinken
- 15a: Unterseite der Einzugstopperzinken
- 15b: Oberseite der Einzugstopperzinken
- 16: Eintrittsstelle
- 17: Austrittsstelle
- 18: Vorsprung
- 19: Sammelkamm
- 20: Sammelkammzinken
- 21: Abstreifnase

- 100: Umlaufrichtung
- a: Erhebungshöhe

## Patentansprüche

1. Kämmvorrichtung (1) für Tiere umfassend:
• ein Gehäuse (2),
• einen umlaufenden Riemen (3), wobei auf dem Riemen (3) Erhebungen (4) angeordnet sind und die Erhebungen (4) eine Erhebungshöhe (a) über dem Riemen (3) aufweisen,
• einen Antrieb (5), und
• eine Trennführung (6, 7), welche im Gehäuse (2) angeordnet ist,
• wobei der Riemen (3) in dem Gehäuse (2) angeordnet ist und zumindest ein Teil des Riemens (3) und/oder der Erhebungen (4) aus dem Gehäuse (2) heraustritt,
• wobei der Antrieb (5) eingerichtet ist den Riemen (3) entlang einer Umlaufrichtung (100) zu bewegen,
• wobei die Erhebungen (4) eingerichtet sind bei der Bewegung des Riemens (3) Haare aus einem Fell eines Tieres aufzunehmen, und
• wobei die Trennführung (6, 7) eingerichtet ist, mittels zwischen den Erhebungen (4) angeordneten Trennführungszinken (8, 9) die von den Erhebungen (4) aufgenommenen Haare innerhalb des Gehäuses (2) abzustreifen.

2. Kämmvorrichtung (1) nach Anspruch 1, **dadurch gekennzeichnet, dass** die Trennführung (6, 7) eine erste Trennführung (6) mit ersten Trennführungszinken (8) und eine zweite Trennführung (7) mit zweiten Trennführungszinken (9), deren Geometrie von der Geometrie der ersten Trennführungszinken (8) bevorzugt unterschiedlich ist, aufweist, wobei der Riemen (3) bei Bewegung entlang der Umlaufrichtung (100) innerhalb des Gehäuses (2) zuerst an der ersten Trennführung (6) und danach an der zweite Trennführung (7) entlang geführt ist.

3. Kämmvorrichtung (1) nach einem der vorhergehenden Ansprüche, **gekennzeichnet durch** eine innerhalb des Gehäuses (2) angeordnete rotierbare Bürste (10), wobei die Bürste (10) eingerichtet ist, Haare aus der Trennführung (6, 7) und/oder von dem Riemen (3) abzustreifen.

4. Kämmvorrichtung (1) nach Anspruch 3, **gekennzeichnet durch** einen Bürstenabstreifer (11), wobei der Bürstenabstreifer (11) eingerichtet ist Haare von der Bürste (10) abzustreifen.

5. Kämmvorrichtung (1) nach einem der vorherigen Ansprüche, **gekennzeichnet durch** einen Haarauffangbehälter (12), wobei der Haarauffangbehälter (12) eingerichtet ist, die im Gehäuse (2) von dem Riemen (3) abgestreiften Haare aufzunehmen.

6. Kämmvorrichtung (1) nach Anspruch 5, **gekennzeichnet durch** ein Haargebläse (13) das eingerichtet ist, innerhalb des Gehäuses (2) einen Luftstrom von dem Riemen (3), insbesondere von der Trennführung (6, 7), zu dem Haarauffangbehälter (12) zu generieren.

7. Kämmvorrichtung (1) nach einem der vorhergehenden Ansprüche, **gekennzeichnet durch** einen Einzugstopper (14),
• wobei der Einzugstopper (14) an einer Eintrittsstelle (16) des Riemens (3) in das Gehäuse (2) angeordnet ist,
• wobei der Einzugstopper (14) eine Vielzahl an Einzugstopperzinken (15) aufweist und die Einzugstopperzinken (15) zwischen den Erhebungen (4) angeordnet sind,
• wobei die Einzugstopperzinken (15) eine dem Riemen (3) zugewandte Unterseite (15a) und eine dem Riemen (3) abgewandte Oberseite (15b) aufweisen, und
• wobei die Unterseite (15a) der Einzugstopperzinken (15) einen geringeren Abstand zu dem Riemen (3) als die Erhebungshöhe (a) aufweist, insbesondere auf dem Riemen (3) aufliegt, und/oder die Oberseite (15b) der Einzugstopperzinken (15) einen größeren Abstand zu dem Riemen (3) als die Erhebungshöhe (a) aufweisen.

8. Kämmvorrichtung (1) nach Anspruch 7, **dadurch gekennzeichnet, dass** die Oberfläche (15b) der Einzugstopperzinken (15) zumindest einen Vorsprung (18) aufweist, wobei der zumindest eine Vorsprung (18) insbesondere eine entgegen der Umlaufrichtung (100) geneigte Oberfläche aufweist.

9. Kämmvorrichtung (1) nach Anspruch 8, **dadurch gekennzeichnet, dass** die Einzugstopperzinken (15) mehrere Vorsprünge (18) aufweisen, die
• entlang der Umlaufrichtung (100) zueinander versetzt sind,
• so angeordnet sind, dass sich eine in Umlaufrichtung (100) versetzte Sägezahnstruktur ergibt, und
• der Abstand des jeweiligen höchsten Punktes der Sägezahnformen der Sägezahnstruktur zu dem Riemen (3) in Umlaufrichtung (100) zunimmt.

10. Kämmvorrichtung (1) nach einem der vorherigen Ansprüche, **gekennzeichnet durch** einen Sammelkamm (19), wobei der Sammelkamm (19) aus dem Gehäuse (2), insbesondere an einer Austrittsstelle (17) des Riemens (3) herausragt und eingerichtet ist, mittels Sammelkammzinken (20) loses Haar im Fell des Tieres aufzunehmen, so dass dieses lose Haar von den Erhebungen (4) des Riemens (3) aufgenommen werden kann.
